# EUROPEAN PATENT APPLICATION

(11) **EP 1 110 706 A1**
(43) Date of publication of application: **27.06.2001**
(21) Application number: 99830779.7
(22) Date of filing: 15.12.1999
(51) Int. Cl.: B29C 70/08, B29B 17/00

(54) **Method for manufacturing a fibre reinforced support, and fibre reinforced support produced thereof**

(71) Applicant: Top Glass S.p.A., 20096 Pioltello, Milano (IT)
(72) Inventor: Branca, Alfonso, 20145 Milano (IT)
(74) Representative: Sutto, Luca

(57) **Abstract**

A method for producing a manufactured item made of reinforcing fibre is described, comprising the following phases: readying at least a continuous layer (1,1a) made of reinforcing fibre, readying the filling material (2) associating to the continuous layer a pre-set quantity of filling material, mechanically fastening the filling material to the continuous layer to define said laminar support; the manufactured item made of reinforcing fibre can present more than one continuous layer (1,1a), in this case the filling material is interposed between the two continuous layer (1,1a) and the through seams (4) mechanically constraint the continuous layers. The manufactured item produced with this method can be applied advantageously in the production of section bars and posts with variable section.

## Description

The present invention relates to a method for producing a manufactured item made of reinforcing fibre and a manufactured item obtained with that method.

As is well known, the production of manufactured items made of composite materials is based on the presence in the item itself of a matrix typically made of plastic material wherein a mechanically resistant structure, formed by fibres of material having good mechanical characteristics is buried; such fibres have length, orientation and relative disposition that vary depending on the application; as mentioned, the fibres are inserted in a portion of binding material, mainly of polymeric nature, having poor mechanical properties. Obviously, the different design specifications of the manufactured items and the need to contain production costs lead to a widely varied selection, regarding the choice of resistant fibres, the type of structure which the fibres are to define and, lastly, the adoption of the appropriate binding material. In particular, the polymeric binding materials most widely used industrially can be grouped in two families: thermoplastic resins and thermosetting resins. As is well known, thermoplastic resins have such a chemical structure as to allow them to be melted down an indefinite number of times, whereas thermosetting resins, once polymerised, if exposed to high temperatures anew, lose their characteristics irreversibly.

Aside from the chemical/physical characteristics of the two families of plastic materials briefly described above, one should consider the fact that when the manufactured items made with composite materials need to be recycled, thermoplastic-based binding materials present lesser recovery problems than thermosetting-based ones; on the contrary, for composite materials with thermosetting bindings, the resin cannot easily be recovered.

To overcome these drawbacks, recycling of manufactured items made of thermosetting-based composite material is enabled typically through the prior destruction or mechanical crushing of the manufactured item itself, so as to obtain heterogeneous material constituted by broken fibres, portions of fibres incorporated in resin clots, and resin granules. Depending on engineering requirements, thermosetting materials crushed with different grain sizes can be obtained.

To proceed with recycling the material thereby obtained, it is possible to use such material in the different phases of production of other composite manufactured items when no particular and defined mechanical characteristics are required. In greater detail, if it is necessary to produce manufactured items made of composite material, in the past the solution adopted has been that of mixing this recycled material with fresh binding resin, thereby contributing to the creation of volume whilst economising in the use of whole resistant fibres and/or of fresh binding resin, with a consequent cost reduction.

In practice, the material that can be destined to recycling, obtained by crushing operations, is homogeneously distributed in the fresh resin, contributing, albeit in a low percentage, to define the structure of the composite material.

Although widely used, the productive methods according to the prior art summarily described above present some drawbacks.

The particular nature of thermosetting resin and the intrinsic heterogeneity of the crushed material do not allow to define and control with precision the ways in which this material is distributed in the different areas of the manufactured item, especially in relation to the work process whereby the material is obtained; in particular, in current production systems the tendency is to distribute the material that can be destined to recycling in substantially homogeneous fashion over the entire manufactured item, so that the recycled material has a similar effect in all areas of the manufactured item. The disposition of the fibres and of all the material obtained by crushing is typically disorderly and random, to the extent that it is not possible to determine whether the recyclable material added actually does provide any significant benefit in terms of enhancing the structural capabilities of the manufactured items.

These problems are particularly acute in the construction of fibreglass items, for which thermosetting binders are generally adopted and which, during the production cycle, require a step in which the glass fibres are treated chemically to guarantee the adherence between the fibres and the binder.

It is obvious that recyclable fibres do not present similar characteristics able to guarantee the adherence between themselves and the binder; moreover, during their addition to the new manufactured item, they cannot be treated anew; this leads to a further factor of non-definition of the properties of the manufactured item built with recyclable material, since the stability of the connection between binder and fibres obtained by crushing is unknown.

In this situation, the technical task constituting the basis of the present invention is to devise a method for the production of a manufactured item made of reinforcing fibre, able to guarantee an actual stability of the coupling between binding resin, resistant fibres and recycled material, thereby combining the advantageous employment of low-cost materials with the substantial determination of the mechanical properties of the new manufactured item.

A further major aim of the present invention consists of identifying a method that guarantees a distribution of the recycled material in predetermined areas and according to dispositions substantially pre-set within the new manufactured item.

Yet another aim of the method according to the present invention is to devise a methodology which guarantees the employment of the recycled material in such a way as to enable to exploit, to some extent, the mechanical properties of the segments of recycled fibres.

The technical task as set out above and the specified aims are substantially achieved by a method for producing a manufactured item made of reinforcing fibre, as described in one or more of the accompanying claims.

The description is now provided of a preferred, but not exclusive, embodiment of a method for producing a manufactured item made of reinforcing fibre, according to the present invention.

Also described hereafter are a manufactured item made of reinforcing fibre obtained with said method, and some possible uses of the manufactured made of reinforcing fibre for obtaining semi-finished and/or finished products made of composite material.

The description that follows shall be made with reference to the accompanying drawings, provided purely by way of non-limiting indication, in which:

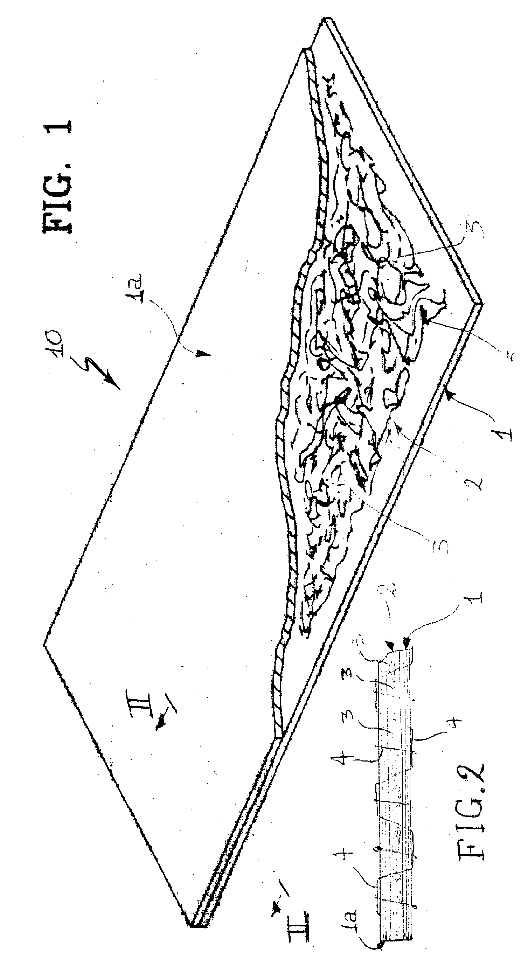

- Figure 1 is a perspective, schematic and partially sectioned view of a manufactured item made of reinforcing fibre obtained with the method according to the invention; and
- Figure 2 is a section according to the trace II - II of Figure 1.

The method according to the invention provides in the first place the readying of a continuous layer 1, preferably made of reinforcing fibre, and the readying of a filling material 2 to be associated to the continuous layer 1.

From the structural point of view, the continuous layer 1 is made of reinforcing fibres such as glass fibre, aramid fibres, carbon fibres or yet other types of fibres and can comprise a plurality of wires oriented parallel, a felt made of unwoven fabric, for instance made of polyester or cellulose, or an actual woven fabric; it should be noted that the continuous layer can also comprise a combination of fabric and/or felt and/or parallel wires, whereas the filling material 2 is obtained by the prior crushing of manufactured items made of composite material to be recycled, preferably thermosetting-based, which crushing in turn calls for at least a step in which the manufactured item is triturated. At the completion of these operations, the filling material obtained is in the form of different corpuscles 3: resin and/or fibre dust, agglomerates of broken fibres and resin, and segments of isolated fibres and heterogeneous clots of resin.

After suitably readying the continuous layer 1 and the filling material 2, it is necessary to associate the filling material 2 to the continuous layer 1 itself; this operation can be conducted in various ways, for instance by allowing the filling material 2 fall from a hopper onto the continuous layer 1 of reinforcing fibre set in motion by a conveyor belt or by other conventional devices such as rollers and the like. It is evident that, however obtained, the continuous layer made of reinforcing fibre must provide a surface for interfacing with the filling material, such that the latter cannot traverse the continuous layer 1. For this purpose the continuous layer 1 generally defines a reticular structure of such thickness as to prevent the traversing by the filling material 2; the subsequent phase of the method according to the invention provides at this point the mechanical fastening of the filling material 2 to the continuous layer 1. This phase can, for instance, be obtained by means of seams 4 which stably engage the different types of corpuscle, characterising the filling material 2, to the continuous support 1.

By mechanically fastening the filling material to the continuous layer 1 of reinforcing fibre, the manufactured item made of reinforcing fibre with laminar structure, indicated in its entirety in the drawings, is defined.

It should be specified that the step of mechanically fastening the filling material 2 to the continuous layer 1 can also be obtained differently; for instance, a particularly advantageous solution provides for associating an additional continuous layer 1a in such a way as to create a sandwich structure wherein the filling material 2 is confined in the hollow defined by the two continuous layers facing each other. The continuous layers 1 and 1a can in turn be mutually engaged, for instance with one or more series of seams 4.

In the example shown in the drawings, the method according to the present invention provides for the presence of two continuous layers, set in such a way as to develop parallel and containing the filling material 2 interposed between them. The step of mechanically fastening the filling material 2 to the continuous layers occurs, in this case as well, by means of through seams 4, which can be advantageously obtained along the edges of the continuous layers or on the entire surface of the continuous layers, depending on the results to be obtained By obtaining these through seams, one simultaneously guarantees the positional stability of the filling material 2 inside the continuous layers, the union of the two continuous layers and the structural co-operation of the seams 4. In particular, the seams 4 are set to traverse the filling material 2 not only to fasten the layers 1 and 1a, but also to serve as blocking elements against the sliding of the various corpuscles 3 constituting the filling material 2.

It should be noted that alternatively to the seams, other mechanical fastening means can be used between the various parts of the manufactured item: circumscribed pressure on the opposing layers, gluing (for instance by making a face of the layer(s) 1 and/or la adhesive), pressing, carding.

The manufactured made with reinforcing fibre with laminar structure obtained with the method according to the invention can advantageously be used in different applications, for instance in the construction of section bars preferably obtained by means of pultrusion. In this productive process, the following steps are conducted in succession: the laminar manufactured item is obtained with the method according to the invention as described above, the laminar manufactured item thus obtained is impregnated with a binding substance, the section of the bar is formed by its forced passage through a cavity of pre-defined shape (or in an extruder through which the partial or total polymerisation of the resin takes place) and lastly transverse cuts may be performed on the section bar as it exits the forming extruder, to obtain finished products of the desired length. The product obtained with this productive process is substantially a section bar made of composite material, in which the part able to withstand mechanical stresses comprises the laminar manufactured item obtained with the method according to the present invention. The core of the laminar manufactured item wherein the filling material is stably positioned is positioned, when forming the section bar, in parts of its section that are not subject to significant tensional states in use; conversely, the continuous layers 1 and 1a external to the filling material 2 may be advantageously positioned wherever considerable stresses are expected, in particular traction. Thanks to the capability of precisely controlling the positioning of the filler material 2, savings are obtained both in terms of fibres and of binding resin added, without any decline in the mechanical properties offered by the section bar.

The manufactured item made of reinforcing fibre, in particular in the embodiment variation providing for the presence of more than one continuous layer made of reinforcing fibre, advantageously finds an application in the construction of support posts with tubular structure. Such posts are obtained through a productive process that comprises the following essential phases: readying a plurality of manufactured items made of reinforcing fibre obtained with the method according to the invention and having different length; winding the laminar support on a mandrel; inserting the mandrel sustaining the manufactured items in a rotating chamber and, lastly, impregnating the laminar supports with a binding substance by means of centrifuging. Using this productive process, posts with variable section are obtained, in particular tapered posts. Along the longitudinal axis of the post the manufactured items according to the invention are positioned in such a way that the two continuous layers of reinforcing fibre of each manufactured item are oriented one inwards (i.e. towards the cylindrical cavity of the tubular post) and the other one outwards. The two continuous layers delimit the filling material in their interior. In this way the continuous layers withstand the mechanical stresses, whilst the filling material stabilises the laminate improving its behaviour relative to flexure and compression loads.

More in general, thanks to the structure of the manufactured item of the invention, it is possible to obtain finished or semi-finished products wherein the filling material is confined in areas of the products with low mechanical stresses, particularly in terms of traction. At the same time, the filling material provides the section with important properties such as a high moment of inertia; in the case of the posts described above, the filling material 2 is positioned substantially in correspondence with an annulus positioned in an intermediate area of the section of the post, between the inner wall and the outer wall of the post itself.

The method and the manufactured item according to the present invention achieve important advantages.

First of all, it should be noted that fastening the crushed material used for recycling to the mechanically resistant laminar layer effectively guarantees the precise determination of the positioning of the recycled material; in particular, given that the addition of binding resin when the manufactured item is in use occurs after the step whereby the material destined to recycling is mechanically fastened to the support layer, the distribution of the material thus recycled is perfectly known and it is impossible for it to move by interaction with the fluid resin or by any other undesired mechanical action.

Another advantage achieved by applying this method to the production of a manufactured item made of fibreglass consists of the fact that the fibre segments present in the recycled material are mechanically fastened to the glass fibres actually working in the manufactured item, and this translates into a considerable favourable contribution in terms of resistance to mechanical stresses.

Advantageously, the use of material obtained by crushing for recycling according to this method is found useful also in the cases in which the occupation of volume is necessary, for instance in structural elements which must be provided with excellent stability to compression stresses, given that in this way it is possible to fill large spaces without having to use new resistant fibres wherever no excessive stresses, in particular traction, are expected. This allows, therefore, to introduce a significant reduction in the costs connected with the materials, especially by reinserting otherwise unusable materials into the productive cycle.

Lastly, the contribution that the filling material 2, appropriately positioned, offers to increasing the moment of inertia of the sections of the products in which it is used (section bars, posts and the like) favours the efficiency of the working portions (new fibres) of the finished product made of composite material.

## Claims

1. A method for producing a manufactured item made of reinforcing fibre, comprising the following phases:
- readying at least a continuous layer (1) made of reinforcing fibre;
- readying a filling material (2);
characterised in that if further comprises the following phases:
- associating to said continuous layer a pre-set quantity of said filling material; and
- mechanically fastening the filling material to the continuous layer to define said manufactured item.

2. A method as claimed in claim 1, characterised in that said continuous layer is obtained by means of a plurality of parallel approached wires.

3. A method as claimed in claim 1, characterised in that said continuous layer is obtained by means of an unwoven fabric or paper structure.

4. A method as claimed in claim 1, characterised in that said continuous layer is obtained by means of a fabric.

5. A method as claimed in claim 1, characterised in that the continuous layer (1) presents reticular structure with thickness exceeding the average dimensions of corpuscles defining said filling material (2).

6. A method as claimed in any of the previous claims, characterised in that the phase of mechanically fastening the first continuous layer and the filling material is carried out by means of seams (4) and/or pressing and/or carding and/or gluing.

7. A method as claimed in any of the previous claims, characterised in that it also provides for the realisation of at least a second continuous layer (1a) as well as an additional phase for mechanically fastening the first continuous layer (1) and the second continuous layer (1a) to the filling material (2), said filling material (2) being positioned between the first continuous layer (1) and the second continuous layer (1a).

8. A method as claimed in claim 7, characterised in that the first and the second continuous layers (1, la) are fastened between them to the filling material (2) by means of through seams and/or by means of gluing, and/or by means of carding, and/or by means of pressing.

9. A method as claimed in any of the previous claims, characterised in that the filling material (2) is obtained from previous crushing operations on manufactured items made of thermosetting-based composite materials.

10. A method as claimed in claim 9, characterised in that said crushing operations comprise at least a phase of triturating manufactured items made of thermosetting-based composite material.

11. A method for producing section bars employing the manufactured item produced with the method according to any of the previous claims, comprising the following phase:
- producing said manufactured item made of reinforcing fibre;
- impregnating the manufactured item made of reinforcing fibre with a binding substance;
- forming the section bar according to a pre-defined shape.

12. A method for producing section bars as claimed in claim 11, characterised in that the phase of forming the section bar according to a pre-defined shape is conducted by pultrusion.

13. A method for producing moulded items employing the manufactured item obtained with the method according to any of the claims from 1 to 10, comprising the following phases:
- producing the manufactured item made of reinforcing fibre;
- placing said manufactured item in a mould;
- closing the mould;
- injecting a binding resin;
- opening the mould and extracting the item.

14. A pultruded section bar having in cross section a main body comprising reinforcing fibres buried in a plastic matrix, characterised in that said reinforcing fibres include at least a manufactured item made of reinforcing fibre of the type obtained in accordance with the method as claimed in any of the previous claims.

15. A method for producing tubular elements, of the type obtained employing the manufactured item made of reinforcing fibre produced with the method as claimed in any of the claims from 1 to 10 comprising the following phases:
- readying a plurality of said manufactured items having different length;
- winding the manufactured items onto a mandrel with a pre-defined disposition;
- inserting said mandrel in a rotating chamber;
- impregnating the laminar supports made of reinforcing fibre with a binding substance by centrifuging in said rotating chamber.

16. A post with variable section made of composite material, comprising in cross section a main body with annular structure obtained with the method as claimed in claim 15, characterised in that the reinforcing manufactured item or items are of the type with two mutually opposite continuous layer between which is associated the filling material, in the finished post, the tubular wall of the post itself being positioned section by section in a substantially central area.
